# DEMANDE DE BREVET EUROPEEN

(11) **EP 1 348 722 A1**
(43) Date de publication de la demande: **01.10.2003**
(21) Numéro de dépôt: 02076480.9
(22) Date de dépôt: 25.03.2002
(51) Int. Cl.: C08F 10/02, C08F 4/70

(54) **Procédé pour la polymérisation des alpha-oléfines**

(71) Demandeur: SOLVAY POLYOLEFINS EUROPE - BELGIUM (Société Anonyme), 1050 Bruxelles (BE)
(72) Inventeur: Francois, Philippe, 1490 Court-Saint-Etienne (BE); Radhakrishnan, Karunakaran, Minneapolis, MN 55455 (US); Menoret, Stéphane, 55218 Ingelheim (DE); Cramail, Henri, 33350 Sainte Terre (FR); Deffieux, Alain, 33000 Bordeaux (FR)
(74) Mandataire: Smith, Julian Philip Howard

(57) **Abrégé**

Procédé de polymérisation des alpha-oléfines dans lequel on met en contact, dans des conditions polymérisantes, au moins une alpha-oléfine avec un système catalytique comprenant
(a) au moins un complexe catalytique à base d'un métal (M) des groupes 6 à 12 du Tableau Périodique,
(b) au moins un trialkylaluminium, répondant à la formule générale AlR₃ dans laquelle chaque R représente, de manière indépendante, un groupe alkyle contenant de 1 à 12 atomes de carbone,
(c) au moins un composé comprenant au moins un groupe contenant une liaison carbone-oxygène, et
(d) de manière optionnelle, un aluminoxane tel que le rapport atomique de l'aluminium provenant de l'aluminoxane (d) à l'aluminium provenant du trialkylaluminium (b) est inférieur à 0,15.

## Description

La présente invention concerne un procédé pour la polymérisation des alpha-oléfines.

Il est connu de polymériser les alpha-oléfines au moyen de systèmes catalytiques comprenant un complexe d'un métal de transition avec un ligand bi- ou tridentate, et un trialkylaluminium. La demande de brevet EP 1054022 ainsi que Kumar et al. (Macromol. Chem. Phys., 2000, 201 (13), 1513) décrivent la polymérisation de l'éthylène à l'aide des catalyseurs à base de fer ayant des ligands de type bis-(imino)pyridine ou à base de nickel ayant des ligands de type di-imine en présence d'un trialkylaluminium. De tels systèmes catalytiques présentent une activité modérée, plus particulièrement à des températures de polymérisation supérieures à la température ambiante. En outre, l'utilisation du triméthylaluminium conduit à la formation d'une fraction de bas poids moléculaires.

Il est également connu de polymériser les alpha-oléfines au moyen de systèmes catalytiques comprenant un complexe d'un métal de transition avec un ligand bi- ou tridentate, et un aluminoxane. La demande de brevet WO 96/23010 décrit l'utilisation de complexes à base d'un métal de transition des groupes 6 à 12 du Tableau Périodique avec des cocatalyseurs choisis parmi les aluminoxanes. La demande de brevet WO 98/27124 décrit un procédé de polymérisation de l'éthylène au moyen d'un système catalytique comprenant un complexe catalytique à base de fer ou de cobalt avec des pyridinebis-(imines) et du méthylaluminoxane. L'utilisation d'un aluminoxane conduit à des activités élevées. Toutefois, les aluminoxanes se présentent sous forme d'oligomères collants et sont difficiles à manipuler et à synthétiser. En outre, les aluminoxanes commercialement disponibles ont une pureté très variable et sont relativement coûteux et instables, et les polymères obtenus sont caractérisés par une distribution des poids moléculaires comprenant une fraction de très bas poids moléculaires.

On a maintenant trouvé un procédé de polymérisation des alpha-oléfines au moyen d'un système catalytique à base d'un catalyseur comprenant un complexe d'un métal des groupes 6 à 12 qui ne présente pas les inconvénients précités.

A cet effet, la présente invention concerne un procédé de polymérisation des alpha-oléfines dans lequel on met en contact, dans des conditions polymérisantes, au moins une alpha-oléfine avec un système catalytique comprenant
(a) au moins un complexe catalytique à base d'un métal (M) des groupes 6 à 12 du Tableau Périodique,
(b) au moins un trialkylaluminium, répondant à la formule générale AlR₃ dans laquelle chaque R représente, de manière indépendante, un groupe alkyle contenant de 1 à 12 atomes de carbone,
(c) au moins un composé comprenant au moins un groupe contenant une liaison carbone-oxygène, et
(d) de manière optionnelle, un aluminoxane tel que le rapport atomique de l'aluminium provenant de l'aluminoxane (d) à l'aluminium provenant du trialkylaluminium (b) est inférieur à 0,15.

Toutes les références au Tableau Périodique des Eléments réfèrent à la version publiée dans CRC Handbook of Chemistry and Physics, 77th Edition, 1996/97; la notation utilisée est la nouvelle notation des groupes par IUPAC.

Dans la présente invention, on entend désigner par alpha-oléfines, les oléfines à insaturation terminale contenant de 2 à 20, de préférence de 2 à 8 atomes de carbone, telles que, notamment, l'éthylène, le propylène, le 1-butène, le 1-méthyl-pentène, le 1-hexène, le 1-octène. Il va de soi que, outre l'alpha-oléfine, un autre monomère copolymérisable avec l'alpha-oléfine peut être mis en oeuvre dans le procédé selon l'invention.

Les complexes catalytiques (a) sont en général choisis parmi ceux contenant au moins deux hétéroatomes et plus particulièrement parmi ceux représentés par la formule (I) 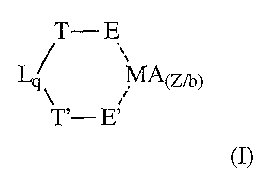 dans laquelle
- M est un métal des groupes 6 à 12 du Tableau Périodique,
- E et E' sont des groupes donneurs d'électrons contenant un atome du groupe 15; E et E' peuvent être différents ou identiques,
- L est un groupe donneur d'électrons contenant un atome du groupe 14 à 16 ou un noyau aromatique hydrocarboné; L peut être différent de ou identique à E et/ou E',
- T et T' représentent de façon indépendante, des ponts saturés ou insaturés contenant des éléments des groupes 14 à 16,
- chaque A représente, de manière indépendante, un atome ou un groupe d'atomes, lié au métal M de manière covalente ou ionique,
- Z est l'état d'oxydation de M,
- b est la valence de A,
- q est 1 ou 0.

Les complexes catalytiques (a) préférés sont ceux répondant à la formule générale (I) dans laquelle le métal (M) est choisi parmi les métaux des groupes 6 à 10. Les complexes catalytiques (a) préférés sont ceux dans lesquels A est un atome d'halogène, un alkoxyde, un aryloxyde, une amine, une phosphine, un hydrure ou un groupe hydrocarboné, éventuellement substitué.

Le complexe catalytique (a) mis en oeuvre dans la présente invention peut éventuellement être complexé par un ou plusieurs groupes donneur d'électrons.

Les complexes catalytiques (a) mis en oeuvre dans la présente invention sont choisis le plus souvent parmi ceux répondant à la formule générale (II) 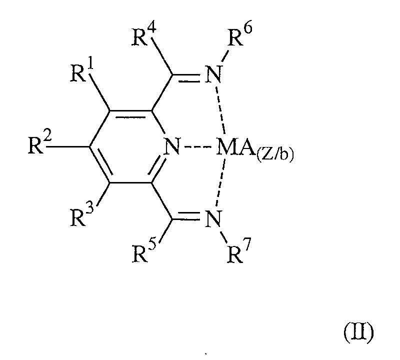 dans laquelle
- M, A, Z et b sont tels que définis pour la formule (I),
- R¹, R², R³, R⁴ et R⁵ représentent chacun, de manière indépendante, un atome d'hydrogène, un groupe hydrocarboné, éventuellement substitué, un groupe hétérohydrocarboné, éventuellement substitué ou un groupe fonctionnel inerte,
- R⁶ et R⁷ représentent chacun, de manière indépendante, un groupe aryle, éventuellement substitué.

Par groupe fonctionnel inerte, on entend désigner dans le cadre de la présente invention, un atome ou un groupe d'atomes, qui n'interfère pas dans les conditions du procédé selon la présente invention et qui ne coordonne pas avec le métal (M). A titre d'exemples de groupes fonctionnels inertes, on peut citer les atomes d'halogène et les éthers de formule -OQ dans laquelle Q est un groupe hydrocarboné, éventuellement substitué.

Les complexes catalytiques préférés du procédé selon l'invention sont ceux représentés par la formule (II) dans laquelle
- R⁶ est un groupe aryle répondant à la formule générale, et 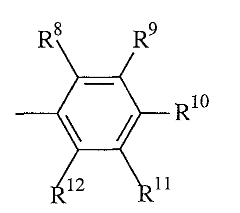
- R⁷ est un groupe aryle répondant à la formule générale 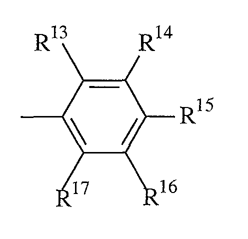
dans lesquelles
- R⁸ et R¹³ représentent chacun, de manière indépendante, un groupe hydrocarboné, éventuellement substitué, un groupe hétérohydrocarboné, éventuellement substitué ou un groupe fonctionnel inerte,
- R⁹, R¹⁰, R¹¹, R¹², R¹⁴, R¹⁵, R¹⁶ et R¹⁷ représentent chacun, de manière indépendante, un atome d'hydrogène, un groupe hydrocarboné, éventuellement substitué, un groupe hétérohydrocarboné, éventuellement substitué ou un groupe fonctionnel inerte,
- les groupes R⁸, R⁹, R¹⁰, R¹¹, R¹², R¹³, R¹⁴, R¹⁵, R¹⁶ et R¹⁷ qui sont adjacents pouvant être reliés l'un à l'autre de manière à former un cycle.

De tels complexes catalytiques ont été décrits par exemple dans la demande de brevet WO 98/27124.

Les complexes catalytiques (a) particulièrement préférés du procédé selon l'invention sont ceux dans lesquels le métal (M) est choisi parmi les métaux des groupes 6 à 9, et plus particulièrement parmi le fer, le chrome ou le cobalt. Avantageusement, A représente un atome d'halogène, plus particulièrement un atome de chlore.

De bons résultats ont été obtenus avec des complexes catalytiques (a) répondant à la formule (II) dans laquelle
- M est un atome de Fe,
- A est un atome de Cl,
- b est égal à 1,
- Z est égal à 2,
- R¹, R² et R³ sont des atomes d'hydrogène,
- R⁴ et R⁵ sont chacun, de manière indépendante, un atome d'hydrogène ou un groupe alkyle comprenant de 1 à 6 atomes de carbone,
- R⁶ est un groupe aryle de formule 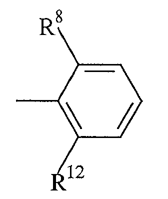
- R⁷ est un groupe aryle de formule 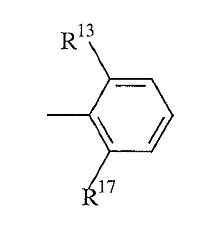
dans lesquelles R⁸ et R¹³ sont un groupe alkyle comprenant au plus 4 atomes de carbone, et R¹² et R¹⁷ sont un atome d'hydrogène ou un groupe alkyle comprenant au plus 4 atomes de carbone.

Les trialkylaluminiums (b) de formule AlR₃ mis en oeuvre dans le procédé selon l'invention sont avantageusement choisis parmi ceux dans lesquels chaque R représente, de manière indépendante, un groupe alkyle contenant de 1 à 10 atomes de carbone, plus particulièrement ceux dans lesquels chaque R représente, de manière indépendante, un groupe alkyle contenant de 1 à 6 atomes de carbone, et leurs mélanges. Tout particulièrement préférés sont les trialkylaluminiums (b) dans lesquels chaque R est un groupe alkyle linéaire contenant de 1 à 6 atomes de carbone. Le triméthylaluminium (TMA) a donné de bons résultats.

Les composés (c) comprenant au moins un groupe contenant une liaison carbone-oxygène mis en oeuvre dans le procédé selon l'invention peuvent être de nature organique ou inorganique. Les composés (c) sont généralement choisis parmi les alcools, les aldéhydes, les cétones, les acides carboxyliques et le dioxyde de carbone. On préfère utiliser les cétones, les acides carboxyliques et le dioxyde de carbone. Les cétones, et plus particulièrement les cétones comprenant des groupes aromatiques, sont particulièrement préférées. Parmi ces cétones, la benzophénone est préférée.

Le système catalytique mis en oeuvre dans le procédé selon l'invention contient de manière optionnelle, un aluminoxane (d). Par aluminoxanes, on entend désigner les composés répondant à la formule R¹⁸-(Al R¹⁸O)ₘ-AlR¹⁸₂ et les composés cycliques répondant à la formule (- AlR¹⁸O -)ₘ₊₂ dans lesquelles m est un nombre de 1 à 40 et R¹⁸ est un groupe alkyle ou aryle contenant de 1 à 12 atomes de carbone. Les composés préférés sont choisis parmi les méthyl- , les éthyl- , les isobutylaluminoxanes et leurs mélanges, et plus particulièrement parmi ceux dans lesquels m est un nombre de 2 à 20. Tout particulièrement préféré est le méthylaluminoxane (MAO) dans lequel m est un nombre de 10 à 18.

La quantité optionnelle d'aluminoxane (d) mise en oeuvre dans le procédé selon l'invention est avantageusement telle que le rapport atomique de l'aluminium provenant de l'aluminoxane (d) à l'aluminium provenant du trialkylaluminium (b) est inférieur à 0,12. Des rapports atomiques de l'aluminium provenant de l'aluminoxane (d) à l'aluminium provenant du trialkylaluminium (b) d'au plus 0,1, plus particulièrement d'au plus 0,08 sont préférés. De préférence, ce rapport est d'au moins 0,001, plus particulièrement d'au moins 0,003. On préfère tout particulièrement des rapports atomiques d'au moins 0,005 et d'au plus 0,06. Des rapports atomiques de l'aluminium provenant de l'aluminoxane (d) à l'aluminium provenant du trialkylaluminium (b) d'au moins 0,01 et d'au plus 0,05 ont donné de bons résultats.

La quantité de trialkylaluminium (b) mise en oeuvre dans le procédé selon l'invention est en général telle que le rapport atomique de l'aluminium provenant du trialkylaluminium (b) au métal de transition provenant du complexe catalytique (a) est de 5 à 20000. De préférence, ce rapport est d'au moins 20. Le plus souvent, la quantité d'alkylaluminium mise en oeuvre est telle que le rapport atomique de l'aluminium au métal de transition est d'au plus 15000, plus particulièrement d'au plus 10000.

Dans le procédé selon l'invention, le rapport molaire du trialkylaluminium (b) au groupe contenant une liaison carbone-oxygène du composé (c) est généralement de (1+n) à (3+n), n étant le nombre d'atomes d'hydrogène acide présents dans le composé (c). Dans le cas d'un composé (c) ne comprenant pas d'atomes d'hydrogène acide et plus particulièrement dans le cas où le composé (c) est une cétone, ce rapport est de préférence d'au moins 1,03, plus particulièrement d'au moins 1,06. Dans ce cas, ce rapport est de préférence d'au plus 2, plus particulièrement d'au plus 1,7. Dans ce cas, des rapports molaires d'au moins 1,1 et d'au plus 1,4 sont tout particulièrement préférés, parce qu'ils permettent d'obtenir avec une activité élevée des polymères d'alpha-oléfines ne contenant pas de fraction de bas poids moléculaires et ayant une distribution des poids moléculaires monomodale.

Dans le procédé selon l'invention, le trialkylaluminium (b) est généralement d'abord mis en contact avec le composé comprenant au moins un groupe contenant une liaison carbone-oxygène (c). Avantageusement, le mélange réactionnel contenant le trialkylaluminium (b) et le composé (c) est chauffé. La durée de chauffage dudit mélange est généralement de 1 minute à 10 heures, plus particulièrement de 20 minutes à 8 heures. La température de chauffage dudit mélange est généralement de 30 à 150°C, plus particulièrement de 40 à 100 °C. Avantageusement le mélange contenant le trialkylaluminium (b) et le composé (c) est ensuite refroidi, le plus souvent jusqu'à une température de 0°C à température ambiante. Généralement la quantité optionnelle d'aluminoxane (d) est alors ajoutée. Généralement, le mélange réactionnel contenant le trialkylaluminium (b), le composé (c) et, de manière optionnelle, l'aluminoxane (d) est chauffé pendant une durée qui est généralement de 1 à 10 heures, plus particulièrement de 3 à 8 heures à une température qui est généralement de 30 à 150°C, plus particulièrement de 40 à 100 °C. Avantageusement ce mélange est ensuite refroidi, le plus souvent jusqu'à température ambiante, puis il est introduit dans le réacteur de polymérisation. Le réacteur de polymérisation peut contenir l'alpha-oléfine. Selon une variante, le réacteur de polymérisation contient le complexe catalytique (a), éventuellement en présence de l'alpha-oléfine.

Le procédé de polymérisation selon l'invention peut être réalisé en continu ou en discontinu, selon n'importe quel procédé connu, notamment en solution ou en suspension dans un diluant hydrocarboné, en suspension dans le monomère, ou un des monomères, maintenu à l'état liquide ou encore en phase gazeuse.

De manière optionnelle, le procédé de polymérisation selon l'invention peut être effectué en présence d'un ou plusieurs agents de réglage de la masse moléculaire des polyoléfines tels que l'hydrogène. Le procédé selon l'invention peut également être effectué en ajoutant un ou plusieurs agents anti-croûtage et/ou un ou plusieurs agents capteurs de poison tels que les dérivés organiques de lithium, magnésium, zinc, aluminium ou étain.

La température à laquelle est effectué le procédé de polymérisation selon l'invention est généralement de -50 °C à + 300 °C, le plus souvent de -20 à 130 °C. La température de polymérisation est de préférence d'au moins 0 °C. De manière préférée, elle ne dépasse pas 115 °C.

La pression totale à laquelle est effectué le procédé selon l'invention est en général choisie entre 1 10⁵ et 100 10⁵ Pa, plus particulièrement entre 1 10⁵ et 55 10⁵ Pa.

Le procédé de polymérisation selon l'invention est avantageusement appliqué à la fabrication de polymères de l'éthylène, et plus particulièrement, à la fabrication d' homo- et de copolymères de l'éthylène comprenant au moins 90 moles % d'unités dérivées de l'éthylène. Les copolymères préférés sont ceux de l'éthylène et d'une autre alpha-oléfine comprenant de 3 à 8 atomes de carbone. Particulièrement préférés sont les copolymères de l'éthylène et du 1-butène et/ou du 1-hexène. Dans ce cas, le procédé de polymérisation est de préférence réalisé en suspension dans un diluant hydrocarboné. Le diluant hydrocarboné est généralement choisi parmi les hydrocarbures aliphatiques contenant de 3 à 10 atomes de carbone. De préférence, le diluant est choisi parmi le propane, l'isobutane, l'hexane ou leurs mélanges.

Le procédé selon l'invention permet d'obtenir des polymères d'alpha-oléfines avec des activités élévées, supérieures à celles obtenues en utilisant des trialkylaluminiums seuls. Le procédé selon l'invention permet d'obtenir des activités comparables, même supérieures à celles obtenues en utilisant des aluminoxanes seuls. En outre, il permet d'obtenir des polymères d'alpha-oléfines, et plus particulièrement des polyéthylènes ne présentant pas de bas poids moléculaires. Il permet de moduler la distribution des poids moléculaires des polymères d'alpha-oléfines, et plus particulièrement des polyéthylènes.

Les exemples suivants servent à illustrer l'invention. Les méthodes de mesure des grandeurs mentionnées dans les exemples, et la signification des symboles utilisés dans ces exemples sont explicitées ci-dessous.

Les poids moléculaires moyens en nombre (Mₙ) et en poids (M_{w}) sont obtenus par chromatographie d'exclusion stérique à partir d'une solution de polymère dans le trichlorobenzène à 0,5 g/l, au moyen d'une colonne polystyrénique telle que la colonne Waters STYRAGEL® HMW 6E commercialisée par Waters Co Ltd. La distribution des poids moléculaires (DPM) est caractérisée par le rapport de M_{w}/Mₙ.

L'activité catalytique est caractérisée par la quantité de polymère formée lors des essais de polymérisation et est exprimée en kg de polymère par mole de métal de transition mis en oeuvre, par heure de polymérisation et par 10⁵ Pa.

### Exemple 1

Dans un ballon de 100 ml on a ajouté 4 g (0,022 mole) de benzophénone (Ph₂CO) et 14 ml (0,028 mole) de TMA en solution 2M dans le toluène de façon à atteindre un rapport molaire du TMA à la Ph₂CO de 1,27. Cette solution a été chauffée à 60°C pendant 90 minutes sous agitation et puis a été refroidie à température ambiante; ensuite 0,4 ml de MAO à 10% en poids dans le toluène a été ajouté. Ensuite, on a chauffé ce mélange à 60°C pendant 4 heures, et après on a refroidi jusqu'à température ambiante.

Dans un autoclave de 300 ml, préalablement conditionné sous azote, on a ajouté 100 ml de toluène. L'autoclave a alors été porté à 30°C et tiré sous vide durant 5 minutes. On y a ajouté ensuite l'éthylène jusqu'à obtenir une pression de 1 10⁵ Pa. La quantité adéquate du mélange réactionnel de TMA, de la Ph₂CO et du MAO préparé comme décrit ci-avant, ont été introduits dans le réacteur, de façon à atteindre un rapport atomique Al/Fe de 1000. Ce mélange réactionnel est ensuite agité pendant 10 minutes avant de démarrer la polymérisation par l'introduction de 0,8x10⁻³ mmole du complexe catalytique suivant

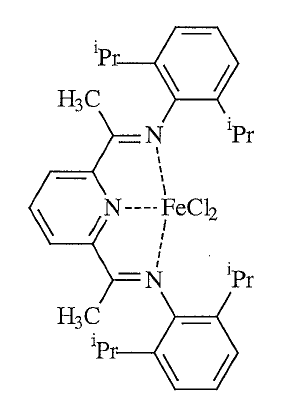

La température et la pression ont été maintenues constantes pendant une heure. La polymérisation a été arrêtée par dégazage de l'éthylène. Le contenu du réacteur a été vidé dans un bécher contenant 100 ml de méthanol. Dans le réacteur, 300 ml de toluène ont été ajoutés et agités pendant 2 heures à 100 °C sous 5 10⁵ Pa d'azote afin d'y dissoudre le polymère restant dans le réacteur. Ce toluène a alors été ajouté au même becher. Un large excès d'acétone et 5 ml d'HCl concentré dilué dans 50 ml d'eau ont été ajoutés dans les 600 ml de toluène afin d'y précipiter le polymère et de détruire le catalyseur et le cocatalyseur présents. Le polymère précipité a été filtré et séché jusqu'à poids constant.

Les résultats obtenus se trouvent dans le tableau 1 ci-après.

### Exemples 2 à 5

Les opérations de l'exemple 1 ont été répétées, sauf que l'on a modifié la quantité de Ph₂CO pour atteindre le rapport TMA/ Ph₂CO comme indiqué dans le tableau 1.

Les résultats obtenus se trouvent dans le tableau 1 ci-après.

### Exemple 6R (non conforme à l'invention)

Les opérations de l'exemple 1 ont été répétées sauf qu'on a utilisé du MAO seul comme cocatalyseur (absence de TMA et de Ph₂CO) ; la quantité de MAO a été ajustée afin d'atteindre le même rapport atomique Al/Fe.

Les résultats obtenus se trouvent dans le tableau 1 ci-après.

La comparaison de l'exemple 6R avec les exemples 1 et 4 montre que le procédé selon l'invention permet d'obtenir des polyéthylènes avec une activité catalytique plus élévée par rapport à un système catalytique comprenant du MAO, et dans certains cas avec une DPM monomodale.

### Exemple 7R (non conforme à l'invention)

Les opérations de l'exemple 1 ont été répétées sauf que l'ajout de la Ph₂CO et du MAO ont été omis.

Les résultats obtenus se trouvent dans le tableau 1 ci-après.

La comparaison des exemples 1 à 5 avec l'exemple 7R montre que le procédé selon l'invention permet d'obtenir des polyéthylènes avec une activité catalytique plus élévée par rapport à un système catalytique ne comprenant pas de composé (c).

### Exemple 8 (conforme à l'invention)

Dans un ballon de 100 ml, on a dissous 0,9 g (0,0049 mole) de benzophénone (Ph₂CO) dans 10 mL de toluène. Après avoir refroidi cette solution à 0 °C, 4,3 ml (0,0086 mole) de TMA en solution 2M dans le toluène ont été ajoutés de façon à atteindre un rapport molaire du TMA à la Ph₂CO de 1,5. Cette solution a été chauffée à 60°C pendant 5 heures et 30 minutes sous agitation et puis a été refroidie à température ambiante.

Dans un autoclave de 300 ml, préalablement conditionné sous azote, on a ajouté 100 ml de toluène. L'autoclave a alors été porté à 30°C et tiré sous vide durant 5 minutes. On y a ajouté ensuite l'éthylène jusqu'à obtenir une pression de 1 10⁵ Pa. La quantité adéquate du mélange réactionnel de TMA et de Ph₂CO préparé comme décrit ci-avant, ont été introduits dans le réacteur, de façon à atteindre un rapport atomique Al/Fe de 1000. Ce mélange réactionnel est ensuite agité pendant 10 minutes avant de démarrer la polymérisation par l'introduction de 0,8x10⁻³ mmole du complexe catalytique décrit à l'exemple 1. On a ensuite effectué la polymérisation telle que décrite à l'exemple 1.

Les résultats obtenus se trouvent dans le tableau 1 ci-après.

### Exemple 9 (conforme à l'invention)

Dans un ballon de 100 ml, on a dissous 0,7 g (0,0057 mole) d'acide benzoïque (PhCOOH) dans 10 mL de toluène. Après avoir refroidi cette solution à 0 °C, 8,6 ml (0,017 mole) de TMA en solution 2M dans le toluène ont été ajoutés de façon à atteindre un rapport molaire du TMA à la PhCOOH de 3,0. Cette solution a été chauffée à 80°C pendant 2 heures sous agitation et puis a été refroidie à température ambiante; ensuite 2,3 ml de MAO en solution 0,15M dans le toluène ont été ajoutés. Ensuite, on a chauffé ce mélange à 80°C pendant 5 heures, et après on a refroidi jusqu'à température ambiante.

Dans un autoclave de 300 ml, préalablement conditionné sous azote, on a ajouté 100 ml de toluène. L'autoclave a alors été porté à 30°C et tiré sous vide durant 5 minutes. On y a ajouté ensuite l'éthylène jusqu'à obtenir une pression de 1 10⁵ Pa. La quantité adéquate du mélange réactionnel de TMA, de PhCOOH et du MAO préparé comme décrit ci-avant, ont été introduits dans le réacteur, de façon à atteindre un rapport atomique Al/Fe de 1000. Ce mélange réactionnel est ensuite agité pendant 10 minutes avant de démarrer la polymérisation par l'introduction de 0,8x10⁻³ mmole du complexe catalytique décrit à l'exemple 1. La polymérisation a ensuite été effectuée telle que décrite à l'exemple 1.

Les résultats obtenus se trouvent dans le tableau 1 ci-après.

### Exemple 10 (conforme à l'invention)

Dans un ballon de 100 ml, on a dissous 0,7 g (0,0057 mole) d'acide benzoïque (PhCOOH) dans 10 mL de toluène. Après avoir refroidi cette solution à 0 °C, 8,6 ml (0,017 mole) de TMA en solution 2M dans le toluène ont été ajoutés de façon à atteindre un rapport molaire du TMA à la PhCOOH de 3,0. Cette solution a été chauffée à 80°C pendant 7 heures sous agitation et puis a été refroidie à température ambiante.

Dans un autoclave de 300 ml, préalablement conditionné sous azote, on a ajouté 100 ml de toluène. L'autoclave a alors été porté à 30°C et tiré sous vide durant 5 minutes. On y a ajouté ensuite l'éthylène jusqu'à obtenir une pression de 1 10⁵ Pa. La quantité adéquate du mélange réactionnel de TMA et de PhCOOH préparé comme décrit ci-avant, ont été introduits dans le réacteur, de façon à atteindre un rapport atomique Al/Fe de 1000. Ce mélange réactionnel est ensuite agité pendant 10 minutes avant de démarrer la polymérisation par l'introduction de 0,8x10⁻³ mmole du complexe catalytique décrit à l 'exemple 1. On a ensuite effectué la polymérisation telle que décrite à l'exemple 1.

Les résultats obtenus se trouvent dans le tableau 1 ci-après.

### Exemple 11 (conforme à l'invention)

Les opérations de l'exemple 10 ont été répétées, sauf que l'on a modifié la quantité de PhCOOH pour atteindre le rapport TMA/ PhCOOH comme indiqué dans le tableau 1.

Les résultats obtenus se trouvent dans le tableau 1 ci-après.

**Tableau 1**

| Ex. | (c) | TMA/ (c) (mole/mole) | Activité | M_{w} (10³ daltons) | M_{w}/Mₙ |
|---|---|---|---|---|---|
| 1 | Ph₂CO | 1,27 | 3725 | 330 | 9,7 |
| 2 | Ph₂CO | 1,09 | 710 | 490 | 2,8 |
| 3 | Ph₂CO | 1,15 | 1900 | 471 | 3,3 |
| 4 | Ph₂CO | 1,51 | 4925 | 309 | 69,2 |
| 5 | Ph₂CO | 1,78 | 978 | 207 | (bimodal) |
| 6R | (MAO) | - | 2925 | 291 | 253 |
| 7R | sans (Ph₂CO) | - | 87 | - | - |
| 8 | Ph₂CO | 1,3 | 1400 | 224 | 3 |
| 9 | PhCOOH | 3,0 | 5200 | 406 | 68 |
| 10 | PhCOOH | 3,0 | 5900 | 406 | 62 |
| 11 | PhCOOH | 3,5 | 6000 | 432 | 80 |

## Revendications

1. Procédé de polymérisation des alpha-oléfines dans lequel on met en contact, dans des conditions polymérisantes, au moins une alpha-oléfine avec un système catalytique comprenant
(a) au moins un complexe catalytique à base d'un métal (M) des groupes 6 à 12 du Tableau Périodique,
(b) au moins un trialkylaluminium, répondant à la formule générale AlR₃ dans laquelle chaque R représente, de manière indépendante, un groupe alkyle contenant de 1 à 12 atomes de carbone,
(c) au moins un composé comprenant au moins un groupe contenant une liaison carbone-oxygène, et
(d) de manière optionnelle, un aluminoxane tel que le rapport atomique de l'aluminium provenant de l'aluminoxane (d) à l'aluminium provenant du trialkylaluminium (b) est inférieur à 0,15.

2. Procédé selon la revendication 1, dans lequel le complexe catalytique (a) répond à la formule générale (II) 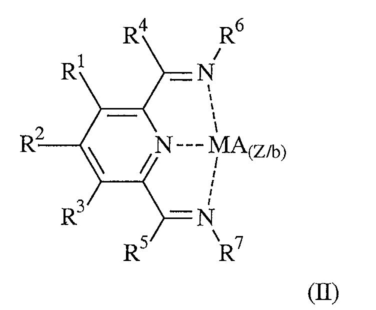 dans laquelle
- M est un métal des groupes 6 à 12 du Tableau Périodique,
- chaque A représente, de manière indépendante, un atome ou un groupe d'atomes, lié au métal M de manière covalente ou ionique,
- Z est l'état d'oxydation de M,
- b est la valence de A,
- R¹, R², R³, R⁴ et R⁵ représentent chacun, de manière indépendante, un atome d'hydrogène ou un groupe hydrocarboné, éventuellement substitué, un groupe hétérohydrocarboné, éventuellement substitué ou un groupe fonctionnel inerte,
- R⁶ et R⁷ représentent chacun, de manière indépendante, un groupe aryle, éventuellement substitué.

3. Procédé selon la revendication 2, dans lequel le complexe catalytique répond à la formule (II) dans laquelle
R⁶ est un groupe aryle de formule générale 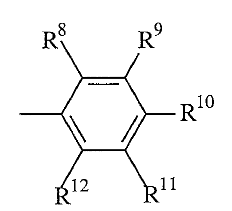 et R⁷ est un groupe aryle de formule générale 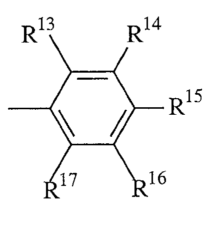 dans lesquelles
- R⁸ et R¹³ représentent chacun, de manière indépendante, un groupe hydrocarboné, éventuellement substitué, un groupe hétérohydrocarboné, éventuellement substitué ou un groupe fonctionnel inerte,
- R⁹, R¹⁰, R¹¹, R¹², R¹⁴, R¹⁵, R¹⁶ et R¹⁷ représentent chacun, de manière indépendante, un atome d'hydrogène, un groupe hydrocarboné, éventuellement substitué, un groupe hétérohydrocarboné, éventuellement substitué ou un groupe fonctionnel inerte,
- les groupes R⁸, R⁹, R¹⁰, R¹¹, R¹², R¹³, R¹⁴, R¹⁵, R¹⁶ et R¹⁷ qui sont adjacents pouvant être reliés l'un à l'autre de manière à former un cycle.

4. Procédé selon la revendication 3, dans lequel le complexe catalytique (a) répond à la formule (II) dans laquelle
- M est un atome de Fe,
- A est un atome de Cl,
- b est égal à 1,
- Z est égal à 2,
- les groupes R¹, R² et R³ sont des atomes d'hydrogène,
- les groupes R⁴ et R⁵ sont chacun, de manière indépendante, un atome d'hydrogène ou un groupe alkyle comprenant de 1 à 6 atomes de carbone,
- R⁶ est un groupe aryle de formule, et 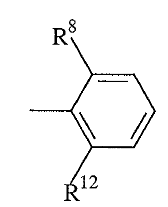
- R⁷ est un groupe aryle de formule 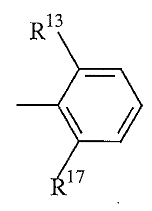
dans lesquelles R⁸ et R¹³ sont un groupe alkyle comprenant au plus 4 atomes de carbone,
et R¹² et R¹⁷ sont un atome d'hydrogène ou un groupe alkyle comprenant au plus 4 atomes de carbone.

5. Procédé selon l'une quelconque des revendications 1 à 4 dans lequel le composé comprenant au moins un groupe contenant une liaison carbone-oxygène (c) est choisi parmi les cétones, les acides carboxyliques et le dioxyde de carbone.

6. Procédé selon l'une quelconque des revendications 1 à 5 dans lequel l'aluminoxane (d) est le méthylaluminoxane.

7. Procédé selon l'une quelconque des revendications 1 à 6 dans lequel le rapport atomique de l'aluminium provenant de l'aluminoxane (d) à l'aluminium provenant du trialkylaluminium (b) est de 0,01 à 0,05.

8. Procédé selon l'une quelconque des revendications 1 à 7 dans lequel le rapport molaire du trialkylaluminium (b) au groupe contenant une liaison carbone-oxygène du composé (c) est de (1+n) à (3+n), n étant le nombre d'atomes d'hydrogène acide présents dans le composé (c).

9. Procédé selon l'une quelconque des revendications 1 à 8, dans lequel le trialkylaluminium (b) est choisi parmi les composés de formule AlR₃ dans laquelle chaque R est un groupe alkyle linéaire contenant de 1 à 6 atomes de carbone.

10. Procédé selon la revendication 9, dans lequel le trialkylaluminium (b) est le triméthylaluminium.

11. Procédé selon l'une quelconque des revendications 1 à 10, dans lequel le rapport atomique de l'aluminium provenant du trialkylaluminium (b) au métal de transition (M) provenant du complexe catalytique (a) est de 5 à 20000.

12. Procédé selon l'une quelconque des revendications 1 à 11, dans lequel la polymérisation est effectuée à une température de -50 à 300 °C et sous une pression de 1 à 100 10⁵Pa.

13. Procédé selon l'une quelconque des revendications 1 à 12, appliqué à la fabrication de homo- ou de copolymères de l'éthylène comprenant au moins 90 moles % d'unités dérivées de l'éthylène.
